(19) Europäisches Patentamt
European Patent Office
Office européen des brevets

(11) **EP 4 600 220 A1**

(12) **EUROPEAN PATENT APPLICATION**

(43) Date of publication:
**13.08.2025 Bulletin 2025/33**

(21) Application number: **25156222.9**

(22) Date of filing: **06.02.2025**

(51) International Patent Classification (IPC):
*C01G 53/506* (2025.01)    *H01M 4/00* (2006.01)

(52) Cooperative Patent Classification (CPC):
**C01G 53/506; H01M 4/00;** C01P 2002/52

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.02.2024   JP 2024018074**

(71) Applicant: **TOYOTA JIDOSHA KABUSHIKI KAISHA Aichi-Ken 471-8571 (JP)**

(72) Inventors:
• **OHSAWA, Ryosuke**
  **TOYOTA-SHI, AICHI-KEN, 471-8571 (JP)**
• **NINOMIYA, Takahiko**
  **TOYOTA-SHI, AICHI-KEN, 471-8571 (JP)**
• **NOZAKI, Hiroo**
  **TOYOTA-SHI, AICHI-KEN, 471-8571 (JP)**
• **KINOSHITA, Taku**
  **TOYOTA-SHI, AICHI-KEN, 471-8571 (JP)**

(74) Representative: **Cabinet Beau de Loménie**
  **103, rue de Grenelle**
  **75340 Paris Cedex 07 (FR)**

(54) **POSITIVE ELECTRODE ACTIVE MATERIAL, POSITIVE ELECTRODE, LITHIUM-ION BATTERY, AND METHOD OF MANUFACTURING POSITIVE ELECTRODE ACTIVE MATERIAL**

(57)    A positive electrode active material has a composition represented by $Li_xNi_aCO_bMn_cM1_dM2_eO_2$ and a TM interlayer distance (D) of 2.02 Å to 2.30 Å. In the composition, $0.1 \leq x \leq 1.5$, $0.5 \leq a \leq 1.0$, $0 \leq b \leq 0.3$, $0 \leq c \leq 0.3$, $a + b + c = 1.0$, $0.0005 \leq d \leq 0.050$, and $0.0005 \leq e \leq 0.050$, M1 represents at least one type of element selected from the group comprising Ba, Pr, La, Y, Sr, Ce, Se, Hf, Rh, Zr, and Sn, and M2 represents at least one type of element selected from the group comprising W, Re, Sb, Sn, Ta, Os, Ir, Mo, Nb, Tc, Ru, Ga, Ag, Pd, Ge, As, Zr, In, Pt, Al, and Ti.

EP 4 600 220 A1

**Description**

BACKGROUND

Technical Field

The present disclosure relates to a positive electrode active material, a positive electrode, a lithium-ion battery, and a method of manufacturing the positive electrode active material.

Related Art

Conventionally, various additive elements have been added to positive electrode active materials used in batteries for the purpose of improving, for example, the resistance characteristics of the batteries.

For example, Japanese National Publication No. 2022-513681 discloses a positive electrode active material comprising a nickel-cobalt-manganese-based lithium transition metal oxide including nickel in an amount of 60 mol% or more relative to the total number of moles of metals excluding lithium, wherein the nickel-cobalt-manganese-based lithium transition metal oxide is doped with a doping element M1 (where the doping element M1 is a metal element including Al) and a doping element M2 (where the doping element M2 is one or more types of metal elements selected from the group comprising Mg, La, Ti, Zn, B, W, Ni, Co, Fe, Cr, V, Ru, Cu, Cd, Ag, Y, Sc, Ga, In, As, Sb, Pt, Au, and Si), the nickel-cobalt-manganese-based lithium transition metal oxide includes the doping element M1 in an amount of 100 ppm to 10,000 ppm, and the doping elements M1 and M2 are included in a weight ratio of 50:50 to 99: 1; a method of manufacturing the positive electrode active material; and a positive electrode and a secondary battery that include the positive electrode active material.

Furthermore, Japanese Patent Application Laid-open (JP-A) No. 2021-177491 discloses a positive electrode active material for a lithium secondary battery comprising nickel-based lithium metal oxide particles doped with Zr and Al, the nickel-based lithium metal oxide particles being configured by a core portion in a region having a fixed molar content of nickel and a shell portion that surrounds the outer surface of the core portion and has a concentration gradient in which the molar content of nickel gradually decreases in a direction from an interface with the core portion to an outermost shell.

SUMMARY

In conventional positive electrode active materials, additive elements are added to the positive electrode active materials for purposes such as improving battery resistance characteristics. However, specific additive elements have sometimes had difficulty getting into the crystal structures of the positive electrode active materials and had difficulty contributing to the improvement of the resistance characteristics. For that reason, further improvements are needed from the standpoint of reducing battery resistance when these positive electrode active materials are used in lithium-ion batteries.

The present disclosure has been devised in view of the above circumstances, and it is an object thereof to provide a positive electrode active material with which a low battery resistance can be realized when it is used in a battery, a positive electrode including the positive electrode active material, a lithium-ion battery including the positive electrode, and a method of manufacturing the positive electrode active material.

Means for solving the above problem including the following aspects.

A positive electrode active material of a first aspect of the present disclosure having a composition represented by $Li_xNi_aCo_bMn_cM1_dM2_eO_2$ and a TM interlayer distance (D) of 2.02 Å to 2.30 Å, wherein in the composition, $0.1 \leq x \leq 1.5$, $0.5 \leq a \leq 1.0$, $0 \leq b \leq 0.3$, $0 \leq c \leq 0.3$, $a + b + c = 1.0$, $0.0005 \leq d \leq 0.050$, and $0.0005 \leq e \leq 0.050$, M1 represents at least one type of element selected from the group comprising Ba, Pr, La, Y, Sr, Ce, Se, Hf, Rh, Zr, and Sn, and M2 represents at least one type of element selected from the group comprising W, Re, Sb, Sn, Ta, Os, Ir, Mo, Nb, Tc, Ru, Ga, Ag, Pd, Ge, As, Zr, In, Pt, Al, and Ti.

The positive electrode active material of a second aspect according to the present disclosure is the positive electrode active material of the first aspect, wherein the combination of the M1 element and the M2 element is at least one combination selected from the group comprising Ba-W, Pr-W, La-W, Hf-W, Sr-Nb, Pr-Ta, Y-W, Sr-W, Ce-W, Pr-Re, Ba-Re, Sr-Sb, Se-W, Y-Re, Sr-Re, Rh-W, Zr-W, Sr-Sn, Y-Ta, Y-Sb, Sr-Os, Sr-Ta, Ce-Re, La-Re, Ba-Ta, Sr-Ir, Sn-W, Sr-Mo, Ba-Ti, Ba-Zr, and Ba-Al.

The positive electrode active material of a third aspect according to the present disclosure is the positive electrode active material of the first aspect, wherein the combination of the M1 element and the M2 element is at least one combination selected from the group comprising La-W, Pr-W, and Sr-Nb.

The positive electrode active material of a fourth aspect according to the present disclosure is the positive electrode active material of any one of the first aspect to the third aspect, wherein $0.7 \leq a \leq 1.0$.

The positive electrode active material of a fifth aspect according to the present disclosure is the positive electrode active material of any one of the first aspect to the fourth aspect, wherein the M1 element is Sr.

The positive electrode active material of a sixth aspect according to the present disclosure is the positive electrode active material of any one of the first aspect to the fourth aspect, wherein the M1 element is at least one element selected from the group comprising La and Ce.

The positive electrode active material of a seventh aspect according to the present disclosure is the positive electrode active material of any one of the first aspect to the sixth aspect, wherein the M2 element is W.

A positive electrode of an eighth aspect according to the present disclosure including the positive electrode active material of any one of the first aspect to the seventh aspect.

A lithium-ion battery of a ninth aspect according to the present disclosure having the positive electrode of the eighth aspect.

A method of manufacturing a positive electrode active material of a tenth aspect according to the present disclosure comprising:

> a step of mixing raw materials respectively including Ni, Co, and Mn, a raw material including Li, a raw material including an element represented by M1, and a raw material including an element represented by M2 to obtain a mixture; and
> a sintering step of sintering the mixture by heating it in an oxygen atmosphere to a maximum attained temperature X - 100°C at a heating rate A of 1 °C/minute to 10 °C/minute and heating it from the maximum attained temperature X - 100°C to the maximum attained temperature X at a heating rate B of 0.1 °C/minute to 5 °C/minute that is slower than the heating rate A,
> wherein M1 represents at least one type of element selected from the group comprising Ba, Pr, La, Y, Sr, Ce, Se, Hf, Rh, Zr, and Sn, and M2 represents at least one type of element selected from the group comprising W, Re, Sb, Sn, Ta, Os, Ir, Mo, Nb, Tc, Ru, Ga, Ag, Pd, Ge, As, Zr, In, Pt, Al, and Ti.

According to the present disclosure, provided are a positive electrode active material with which a low battery resistance can be realized when it is used in a battery, a positive electrode including the positive electrode active material, a lithium-ion battery including the positive electrode, and a method of manufacturing the positive electrode active material.

DETAILED DESCRIPTION

An embodiment that is an example of the present disclosure will be described below. These descriptions and the Examples are illustrative of the embodiment and are not intended to limit the scope of the disclosure.

When numerical ranges are given gradationally in the present specification, the upper limit value or the lower limit value given for one numerical range may be replaced with the upper limit value or the lower limit value of another gradationally given numerical range. Furthermore, when numerical ranges are given in the present specification, the upper limit values or the lower limit values of those numerical ranges may be replaced with values described in the Examples.

A component may include plural types of applicable materials.

When referring to the amount of each component in a composition, if plural types of materials applicable to each component are present in the composition, the amount indicates the total amount of the plural types of materials present in the composition unless otherwise specified.

The term "step" includes not only independent steps but also steps that cannot be clearly differentiated from other steps as long as the desired actions of those steps is achieved.

<Positive Electrode Active Material>

The positive electrode active material pertaining to the embodiment of the present disclosure has a composition represented by $Li_xNi_aCo_bMn_cM1_dM2_eO_2$.

Additionally, the TM interlayer distance (D) is 2.02 Å to 2.30 Å.

In the composition, $0.1 \leq x \leq 1.5$, $0.5 \leq a \leq 1.0$, $0 \leq b \leq 0.3$, $0 \leq c \leq 0.3$, $a + b + c = 1.0$, $0.0005 \leq d \leq 0.050$, and $0.0005 \leq e \leq 0.050$, M1 represents at least one type of element selected from the group comprising Ba, Pr, La, Y, Sr, Ce, Se, Hf, Rh, Zr, and Sn, and M2 represents at least one type of element selected from the group comprising W, Re, Sb, Sn, Ta, Os, Ir, Mo, Nb, Tc, Ru, Ga, Ag, Pd, Ge, As, Zr, In, Pt, Al, and Ti.

Conventionally, additive elements (what are called doping elements) have been added to positive electrode active materials for purposes such as improving battery resistance characteristics. It will be noted that in positive electrode active materials, a crystal structure having Li layers including the element Li and TM layers including transition metals such as Ni, Co, and Mn is formed. However, specific doping elements have the characteristic that they have difficulty getting into the crystal structures of the positive electrode active materials and have a small structure stabilizing effect. For that reason, further improvements are needed from the standpoint of reducing battery resistance when these positive electrode active materials are used in lithium-ion batteries.

To address this, the positive electrode active material pertaining to the embodiment of the present disclosure includes two types of doping elements, M1 and M2. By combining the M1 and M2 doping elements, a large amount of the doping elements can be made present in the crystal structure of the positive electrode active material, and the structure stabilizing effect is significantly improved. The reason for this is thought to be that whereas the elements represented by M1 (the M1 element) have difficulty getting into the crystal structure of the positive electrode active material because they all have a large ion radius, combining them with the elements represented by M2 (the M2 element) makes it easier for them to be incorporated into the crystal structure. As a result, the TM interlayer distance (D) in the crystal structure of the positive electrode active material is within the aforementioned range, in other words, the interlayer distance increases.

Additionally, because the structure stabilizing effect is improved, Ni-mixing (cation mixing) in the Li layers during charging and discharging in the lithium-ion battery is inhibited, obstruction of Li-ion movement during charging and discharging is inhibited, and an increase in battery resistance can be inhibited.

Next, the positive electrode active material pertaining to the embodiment of the present disclosure will be described in detail.

(Composition)

The positive electrode active material pertaining to the embodiment of the present disclosure has a composition represented by $Li_xNi_aCo_bMn_cM1_dM2_eO_2$.

In the composition, $0.1 \leq x \leq 1.5$, $0.5 \leq a \leq 1.0$, $0 \leq b \leq 0.3$, $0 \leq c \leq 0.3$, $a + b + c = 1.0$, $0.0005 \leq d \leq 0.050$, and $0.0005 \leq e \leq 0.050$, M1 represents at least one type of element selected from the group comprising Ba, Pr, La, Y, Sr, Ce, Se, Hf, Rh, Zr, and Sn, and M2 represents at least one type of element selected from the group comprising W, Re, Sb, Sn, Ta, Os, Ir, Mo, Nb, Tc, Ru, Ga, Ag, Pd, Ge, As, Zr, In, Pt, Al, and Ti.

In the composition, from standpoints such as battery resistance characteristics, the proportion x of Li is 0.1 to 1.5, preferably 0.3 to 1.4, and more preferably 0.5 to 1.2.

The proportion a of Ni is, from standpoints such as battery resistance characteristics, 0.5 to 1.0, preferably 0.6 to 0.9, and more preferably 0.7 to 0.8. It will be noted that the proportion a of Ni can also be increased, and in that case the proportion a is preferably 0.6 to 1.0 ($0.6 \leq a \leq 1.0$) and more preferably 0.7 to 1.0 ($0.7 \leq a \leq 1.0$).

The proportion b of Co is, from standpoints such as battery resistance characteristics, 0 to 0.3, preferably 0 to 0.2, and more preferably 0.1 to 0.2.

The proportion c of Mn is, from standpoints such as battery resistance characteristics, 0 to 0.3, preferably 0 to 0.2, and more preferably 0.1 to 0.2.

It will be noted that the sum total of the proportions of Ni, Co, and Mn (a + b + c) is 1.0.

The proportion d of the M1 element is, from standpoints such as battery resistance characteristics, 0.0005 to 0.050, preferably 0.001 to 0.040, and more preferably 0.003 to 0.030.

The proportion e of the M2 element is, from standpoints such as battery resistance characteristics, 0.0005 to 0.050, preferably 0.001 to 0.040, and more preferably 0.003 to 0.030.

The positive electrode active material includes the M1 element and the M2 element as additive elements. M1 represents at least one type of element selected from the group comprising Ba, Pr, La, Y, Sr, Ce, Se, Hf, Rh, Zr, and Sn, and M2 represents at least one type of element selected from the group comprising W, Re, Sb, Sn, Ta, Os, Ir, Mo, Nb, Tc, Ru, Ga, Ag, Pd, Ge, As, Zr, In, Pt, Al, and Ti.

Because the positive electrode active material includes the M1 element and the M2 element listed above as additive elements, battery resistance can be reduced when the positive electrode active material is used in a battery.

It will be noted that from the standpoint of reducing battery resistance the combination of the M1 element and the M2 element is preferably at least one combination selected from the group comprising Ba-W, Pr-W, La-W, Hf-W, Sr-Nb, Pr-Ta, Y-W, Sr-W, Ce-W, Pr-Re, Ba-Re, Sr-Sb, Se-W, Y-Re, Sr-Re, Rh-W, Zr-W, Sr-Sn, Y-Ta, Y-Sb, Sr-Os, Sr-Ta, Ce-Re, La-Re, Ba-Ta, Sr-Ir, Sn-W, Sr-Mo, Ba-Ti, Ba-Zr, and Ba-Al.

Moreover, from the standpoint of reducing battery resistance, the combination of the M1 element and the M2 element is preferably at least one combination selected from the group comprising La-W, Pr-W, and Sr-Nb.

The M1 element is, for example, preferably Sr.

Furthermore, from standpoints such as battery resistance characteristics, the M1 element is also preferably at least one element selected from the group comprising La and Ce.

The M2 element is, for example, preferably W.

(TM Interlayer Distance (D))

The positive electrode active material pertaining to the embodiment of the present disclosure has a TM interlayer distance (D) of 2.02 Å to 2.30 Å.

In the positive electrode active material, a crystal structure having Li layers including the element Li and TM layers including transition metals such as Ni, Co, and Mn is formed. Additionally, that the TM interlayer distance (D) is in the above range means that the TM layers are sufficiently large, in other words, that the M1 element, which has a large ion radius, is incorporated in a large amount in the TM layers. Because of this, the structure stabilizing effect of the positive electrode active material improves, and an increase in battery resistance is inhibited.

When the TM interlayer distance (D) is less than 2.02 Å, battery resistance increases. At the same time, the more the TM interlayer distance (D) exceeds 2.30 Å, the more difficult it is to form TM layers with a large interlayer distance.

The TM interlayer distance (D) is, from standpoints such as battery resistance characteristics, preferably 2.04 Å to 2.21 Å and more preferably 2.06 Å to 2.19 Å.

Here, a method of measuring the TM interlayer distance (D) will be described. First, synchrotron X-ray diffraction (XRD) is performed on the positive electrode active material, and a Rietveld analysis (FullProf) is performed on the XRD data. It will be noted that FullProf is an application for performing a Rietveld analysis on XRD data and can calculate the lattice constant and atomic coordinates of a material.

Then, the axial length of c $(C_h)$ when the Chi2 value is at its minimum value and the z coordinates $(Z_{oxy})$ of oxygen are found. It will be noted that the Chi2 value is the value of a convergence index obtained by filtering the XRD data using the least squares method, and the Chi2 value is at its minimum when the divergence between the XRD data and profile fitting is a minimum.

Thereafter, the TM interlayer distance (D) is calculated based on the following equation.

$$\text{Equation: } D = 2[(1/3) - Z_{oxy}]C_h$$

It will be noted that in the positive electrode active material, a crystal structure having Li layers including the element Li and TM layers are formed. The interlayer distance of the Li layers is not particularly limited and is, for example, 2.2 Å to 2.8 Å and moreover is about 2.5 Å.

<Method of Manufacturing Positive Electrode Active Material>

Next, the method of manufacturing a positive electrode active material pertaining to the embodiment of the present disclosure will be described. It will be noted that the aforementioned positive electrode active material pertaining to the embodiment of the present disclosure can be manufactured by the method of manufacturing a positive electrode active material pertaining to the embodiment of the present disclosure described below.

The method of manufacturing a positive electrode active material pertaining to the embodiment of the present disclosure comprises a step of mixing raw materials respectively including Ni, Co, and Mn, a raw material including Li, a raw material including an element represented by M1, and a raw material including an element represented by M2 to obtain a mixture and a sintering step of sintering the mixture by heating it in an oxygen atmosphere to a maximum attained temperature X - 100°C at a heating rate A of 1 °C/minute to 10 °C/minute and heating it from the maximum attained temperature X - 100°C to the maximum attained temperature X at a heating rate B of 0.1 °C/minute to 5 °C/minute that is slower than the heating rate A. M1 represents at least one type of element selected from the group comprising Ba, Pr, La, Y, Sr, Ce, Se, Hf, Rh, Zr, and Sn, and M2 represents at least one type of element selected from the group comprising W, Re, Sb, Sn, Ta, Os, Ir, Mo, Nb, Tc, Ru, Ga, Ag, Pd, Ge, As, Zr, In, Pt, Al, and Ti.

In the positive electrode active material, the M1 element, which has a large ion radius, has the characteristic that it has difficulty getting into the TM layers in the crystal structure. However, in the method of manufacturing a positive electrode active material pertaining to the embodiment of the present disclosure, the M1 element and the M2 element are used in combination, and the sintering temperature is gradually raised as it gets closer to the maximum attained temperature X, specifically, the heating rate from the maximum attained temperature X - 100 °C to the maximum attained temperature X is slowed down. Because of this, the M1 element is incorporated into the TM layers near X - 100 °C, and the additive elements in the TM layers are diffused near the maximum attained temperature X °C. For that reason, a large amount of the M1 element and the M2 element can be made present in the crystal structure of the positive electrode active material, and the TM interlayer distance (D) can be set to the aforementioned range, in other words, the interlayer distance can be increased.

It will be noted that the method of manufacturing a positive electrode active material pertaining to the embodiment of the present disclosure preferably comprises the following steps (1) to (5):

(1) A step of preparing a solution in which raw materials respectively including Ni, Co, and Mn are dissolved (raw material dissolution);

(2) A step of adding the solution to an alkaline solution to precipitate a hydroxide (crystallization);

(3) A step of collecting the precipitate from the alkaline solution;

(4) A step of mixing the precipitate with a raw material including Li, a raw material including an element represented by M1, and a raw material including an element represented by M2 to obtain a mixture (mixing);

(5) A step of sintering the mixture (sintering).

Each of these steps will be described in detail below.

(1) Step of preparing a solution in which raw materials respectively including Ni, Co, and Mn are dissolved

A solution in which a raw material including Ni, a raw material including Co, and a raw material including Mn are dissolved is prepared.

The solution can be prepared by, for example, dissolving the raw material including Ni, the raw material including Co, and the raw material including Mn in a solvent such as water. The concentration of the solution is, for example, preferably in the range of 10 to 40 % by mass. The ratio of Ni / Co / Mn is, relative to Ni: 1.0, preferably a ratio of 1.0 / 0.8 to 1.2 / 0.8 to 1.2 (at%).

Examples of the raw material including Ni include sulfates such as $NiSO_4$, examples of the raw material including Co include sulfates such as $CoSO_4$, and examples of the raw material including Mn include sulfates such as $MnSO_4$.

(2) Step of adding the solution to an alkaline solution to precipitate a hydroxide

Next, the solution is added to an alkaline solution to precipitate a hydroxide. Because of this, particles generated by the hydroxide including Ni, Co, and Mn crystallize, and the particles are obtained as a precipitate. In this step, a transition metal hydroxide is precipitated by, for example, adding the solution and $NH_3$ dropwise while controlling to a fixed pH (e.g., a pH of 10 to 12) the alkaline solution in which the hydroxide has precipitated.

(3) Step of collecting the precipitate from the alkaline solution

Next, the precipitate is collected from the alkaline solution.

Examples of methods of collecting the precipitate particles include methods where the precipitate particles are filtered and rinsed with water. Such methods include a method where the precipitate (particles) is removed by filtration and rinsed with water, and then the liquid with which the precipitate (particles) was rinsed is filtered to remove the precipitate (particles). It will be noted that the precipitate (particles) may be dried after being rinsed with water.

(4) Step of mixing the precipitate with a raw material including Li, a raw material including an element represented by M1, and a raw material including an element represented by M2 to obtain a mixture

Next, the collected precipitate (particles) is mixed with a raw material including Li, a raw material including an element represented by M1, and a raw material including an element represented by M2 to obtain a mixture. For example, the collected precipitate particles can be mixed with the raw material including Li, the raw material including an element represented by M1, and the raw material including an element represented by M2 in a mortar.

Examples of the raw material including Li include $Li_2CO_3$ and LiOH.

Examples of the raw material including M1 (i.e., at least one type of element selected from the group comprising Ba, Pr, La, Y, Sr, Ce, Se, Hf, Rh, Zr, and Sn) include oxides of each element (e.g., BaO, $Pr_2O_3$, $La_2O_3$, and SrO).

Examples of the raw material including M2 (i.e., at least one type of element selected from the group comprising W, Re, Sb, Sn, Ta, Os, Ir, Mo, Nb, Tc, Ru, Ga, Ag, Pd, Ge, As, Zr, In, Pt, Al, and Ti) include oxides of each element (e.g., $W_2O_3$, $MoO_3$, and NbO).

(5) Step of sintering the mixture

Next, the mixture of the collected precipitate (particles) and the raw material including Li, the raw material including an element represented by M1, and the raw material including an element represented by M2 is sintered. For example, the mixture can be sintered using a sintering furnace (e.g., a muffle furnace).

As heating conditions during the sintering, the mixture is heated to the maximum attained temperature X - 100°C at a heating rate A of 1 °C/minute to 10 °C/minute and heated from the maximum attained temperature X - 100°C to the maximum attained temperature X at a heating rate B of 0.1 °C/minute to 5 °C/minute that is slower than the heating rate A. By adjusting the heating conditions as described above, a large amount of the M1 element and the M2 element can be made present in the crystal structure of the positive electrode active material, and the TM interlayer distance (D) can be set to the aforementioned range, in other words, the interlayer distance can be increased.

It will be noted that the heating rate A to the maximum attained temperature X - 100 °C is 1 °C/minute to 10 °C/minute and more preferably 3 °C/minute to 6 °C/minute.

The heating rate B from the maximum attained temperature X - 100°C to the maximum attained temperature X is a rate of 0.1 °C/minute to 5 °C/minute and slower than the heating rate A, and is preferably 0.5 °C/minute to 2 °C/minute.

The amount of time during the heating from the maximum attained temperature X - 100°C to the maximum attained temperature X is preferably 20 minutes to 1000 minutes and more preferably 50 minutes to 200 minutes.

Furthermore, as conditions for the sintering, the maximum attained temperature X is preferably 500 °C to 1500 °C and more preferably 800 °C to 1200 °C. The sintering is performed in an oxygen atmosphere, and the amount of heating time after the temperature reaches the maximum attained temperature X can be set to 5 hours to 20 hours.

It will be noted that disintegration may be performed on the sintered mixture to give the positive electrode active material a predetermined particle size. Examples of disintegration methods include methods such as milling using a miller (e.g., a jet mill).

By going through these steps, the positive electrode active material pertaining to the embodiment of the present disclosure can be obtained.

<Lithium-ion Battery>

The lithium-ion battery pertaining to the embodiment of the present disclosure has the positive electrode active material pertaining to the embodiment of the present disclosure. The lithium-ion battery has, for example, a negative electrode, a positive electrode, a separator, and an electrolyte.

The lithium-ion battery pertaining to the embodiment of the present disclosure may be a solid-state battery having a solid-state electrolyte or a liquid battery having a liquid electrolyte solution. Furthermore, the lithium-ion battery may be a bipolar battery including a positive electrode active material layer and a negative electrode active material layer on both sides of a current collector having the functions of a positive electrode current collector and a negative electrode current collector.

(Positive Electrode)

The positive electrode includes, for example, a positive electrode current collector and a positive electrode active material layer bonded on the positive electrode current collector.

The positive electrode active material layer has the positive electrode active material pertaining to the embodiment of the present disclosure as the positive electrode active material. Details about the positive electrode active material have already been described, so they will be omitted here.

The positive electrode active material layer may include a conductive material in addition to the positive electrode active material, and may further include components other than this, such as a binder and various additives for example. Examples of the conductive material include non-graphitizable carbons, graphitizable carbons such as acetylene black and carbon black, and graphite. Examples of the binder include vinyl halide resins such as polyvinylidene fluoride (PVdF).

The positive electrode current collector is preferably a conductive member comprising a metal with good conductivity (e.g., aluminum). It will be noted that a current collector having the functions of a positive electrode current collector and a negative electrode current collector (i.e., a bipolar battery) may also be used.

(Negative Electrode)

The negative electrode includes, for example, a negative electrode current collector and a negative electrode active material layer bonded on the negative electrode current collector. The negative electrode current collector is preferably a conductive member comprising a metal with good conductivity (e.g., copper). It will be noted that a current collector having the functions of a positive electrode current collector and a negative electrode current collector (i.e., a bipolar battery) may also be used.

The negative electrode active material layer includes a negative electrode active material. Examples of the negative electrode active material include graphite carbons such as natural graphite, artificial graphite, and amorphous coated graphite. The percentage that graphite occupies in the graphite carbon is generally 50% or more by mass and preferably 80% or more by mass. The negative electrode active material layer may be configured by just the negative electrode active material or may include components other than the negative electrode active material as needed, such as a thickener and a binder. Examples of the thickener include celluloses such as carboxymethyl cellulose (CMC). Examples of the binder include rubbers such as styrene butadiene copolymer (SBR) and vinyl halide resins such as polyvinylidene fluoride (PVdF).

(Separator)

The separator is an electrically insulating porous film. The separator electrically separates the positive electrode and the negative electrode. The separator may, for example, have a thickness of 5 to 30 $\mu$m. The separator can, for example, be configured by a porous polyethylene (PE) film or a porous polypropylene (PP) film. The separator may have a multilayer structure. For example, the separator may be configured by laminating a porous PP film, a porous PE film, and a porous PP film in this order. The separator may have a heat-resistant layer on its surface. The heat-resistant layer includes a heat-resistant material. Examples of the heat-resistant material include metal oxide particles such as alumina and high melting point resins such as polyimides.

(Electrolyte Solution)

The battery pertaining to the embodiment of the present disclosure may moreover be a liquid battery having an electrolyte solution. Particularly a nonaqueous electrolyte solution is preferred.

. Solvent

The nonaqueous electrolyte solution includes a solvent (nonaqueous solvent) and an electrolyte.
Examples of the solvent (nonaqueous solvent) include ethyl carbonate (EC), dimethyl carbonate (DMC), ethyl methyl carbonate (EMC), propylene carbonate (PC), fluoroethylene carbonate (FEC), N,N-diethyl-N-methyl-N-(2-methoxyethyl)ammonium bis(fluorosulfonyl)imide (DEME), 1-ethyl-3-methylimidazolium bis(fluorosulfonyl)imide (EMI), and 1-ethyl-2,3-dimethylimidazolium bis(fluorosulfonyl)imide (DEMI-FSI).

.Electrolyte

Examples of the electrolyte in the electrolyte solution include Li salts. Examples of Li salts include lithium bis(fluorosulfonyl)imide (LiFSI), $LiPF_6$ (lithium hexafluorophosphate), lithium tetrafluoroborate ($LiBF_4$), and Li $[N(CF_3SO2)_2]$.
The amount of the electrolyte may, for example, be 1.0 to 2.0 mol/L and is preferably 1.0 to 1.5 mol/L.
The electrolyte solution may include, in addition to the solvent and the electrolyte, various additives such as, for example, a thickener, a film forming agent, and a gas generating agent. The electrolyte is typically a liquid nonaqueous electrolyte solution at room temperature (e.g., 25 $\pm$ 10 °C). The electrolyte solution is typically liquid in the environment in which the battery is used (e.g., in temperature environments of -20 to +60° C).

(Applications)

Applications for the battery include power sources for driving hybrid electric vehicles (HEV), plug-in hybrid electric vehicles (PHEV), and battery electric vehicles (BEV).

EXAMPLES

The present disclosure will be described below based on Examples, but the present disclosure is in no way limited to these Examples.

<Example 1>

(Synthesis of Positive Electrode Active Material)

A positive electrode active material having a composition represented by $Li_xNi_aCo_bMn_cM1_dM2_eO_2$ and the proportions shown in Table 1 for x, a, b, c, d, and e and using the elements shown in Table 1 as the element represented by M1 and the element represented by M2 was synthesized by the method described below.

Raw Material Solution

A raw material solution was obtained by dissolving $NiSO_4$, $CoSO_4$, and $MnSO_4$ in ion exchange water. The ratio of Ni / Co / Mn was 1/1/1 (at%) and the concentration of the aqueous solution was 30% by mass.

. Crystallization

A certain amount of $NH_3$ aqueous solution was put into a reaction vessel, and nitrogen replacement was performed while stirring the solution with a stirrer. NaOH was added to the reaction vessel to make the pH alkaline. Next, the raw material solution and $NH_3$ were added dropwise while controlling the pH inside the reaction vessel to a fixed pH (a pH of 10 to 12) to precipitate a transition metal hydroxide.

·Rinsing, Filtration, and Drying

The precipitated transition metal hydroxide was removed by filtration, ion exchange water was added, and the transition metal hydroxide was stirred with a stirrer to disperse and rinse it.
Next, the liquid in which the transition metal hydroxide was rinsed was filtered to remove the transition metal hydroxide.
Next, the filtered transition metal hydroxide was dried at 120 °C for 16 hours to cause the water to evaporate.

Mixture of Li Raw Material, M1 Raw Material, and M2 Raw Material

The dried transition metal hydroxide was mixed with $Li_2CO_3$ and LiOH as the Li raw material, BaO as the M1 raw material, and $W_2O_3$ as the M2 raw material in a mortar.

. Sintering and Disintegration

The mixture of the transition metal hydroxide and the Li raw material, the M1 raw material, and the M2 raw material was sintered in a sintering furnace (a muffle furnace). It will be noted that the sintering was performed in an oxygen atmosphere with, as the sintering conditions, the maximum attained temperature (X) being set to 800 °C, the heating rate (°C/minute) to the maximum attained temperature (X) - 100 °C and the heating rate (°C/minute) from the maximum attained temperature (X) - 100 °C to the maximum attained temperature (X) being set to the conditions shown in Table 2, and the amount of heating time after reaching the maximum attained temperature being set to 10 hours.
Next, the sintered mixture was milled in a mill (a jet mill) to disintegrate it to a predetermined particle size.
In this way was the positive electrode active material of Example 1 obtained.

<Examples 2 to 6>

Positive electrode active materials of Example 2 to 6 were obtained in the same way as in Example 1 except that the M1 raw material in Example 1 was changed from BaO to $Pr_2O_3$ (Example 2), $La_2O_3$ (Example 3), and SrO (Examples 4 to 6), the M2 raw material was changed from $W_2O_3$ to $W_2O_3$ (Examples 2 to 4), $MoO_3$ (Example 5), and NbO (Example 6).

<Comparative Example 1>

A positive electrode active material of Comparative Example 1 was obtained in the same way as in Example 1 except that the M1 raw material and the M2 raw material in Example 1 were not added and, regarding the sintering conditions, the heating rate (°C/minute) to the maximum attained temperature (X) - 100 °C and the heating rate (°C/minute) from the maximum attained temperature (X) - 100 °C to the maximum attained temperature (X) were set to the conditions shown in Table 2 (i.e., both were set to the same heating rate).

<Comparative Examples 2 and 4>

Positive electrode active materials of Comparative Examples 2 and 4 were obtained in the same way as in Example 1 except that the M1 raw material in Example 1 was changed from BaO to ZrO (Comparative Example 2) and $La_2O_3$ (Comparative Example 4), the M2 raw material was changed from $W_2O_3$ to $Al_2O_3$ (Comparative Example 2) and $W_2O_3$ (Comparative Example 4), and, regarding the sintering conditions, the heating rate (°C/minute) to the maximum attained temperature (X) - 100 °C and the heating rate (°C/minute) from the maximum attained temperature (X) - 100 °C to the maximum attained temperature (X) were set to the conditions shown in Table 2 (i.e., both were set to the same heating rate).

<Comparative Example 3>

A positive electrode active material of Comparative Example 3 was obtained in the same way as in Example 1 except that the M1 raw material and the M2 raw material in Example 1 were changed to four types of raw materials, $Al_2O_3$, MgO, $TiO_2$, and $La_2O_3$ and, regarding the sintering conditions, the heating rate (°C/minute) to the maximum attained temperature (X) - 100 °C and the heating rate (°C/minute) from the maximum attained temperature (X) - 100 °C to the maximum attained temperature (X) were set to the conditions shown in Table 2 (i.e., both were set to the same heating rate).

[Cell Preparation]

Cells were prepared using the positive electrode active materials obtained in each of the Examples and each of the Comparative Examples.

· Cell Configuration

Wound cylindrical

Positive electrode composition: Positive electrode active material/acetylene black (conductive material)/polyvinylidene fluoride = 88/10/2 (% by mass)

Negative electrode composition: Natural graphite / styrene butadiene rubber (SBR) / carboxymethyl cellulose (CMC) Electrolyte solution composition: Electrolyte = $LiPF_6$ (1 M), solvent = ethylene carbonate (EC)/dimethyl carbonate (DMC)/ethyl methyl carbonate (EMC) = 3/4/3 (% by volume)

.Electrode Preparation

Cells were prepared by applying a positive electrode and a negative electrode onto current collectors using a film applicator with a film thickness regulating function (Allgood Co., Ltd.) and drying the electrodes in a dryer at 80 °C for 5 minutes.

[TM Interlayer Distance (D)]

The TM interlayer distances (D) in the positive electrode active material layers obtained in each of the Examples and Comparative Examples were found by the aforementioned method. The results are shown in Table 1.

[Ni-mixing]

Ni-mixing in the positive electrode active material layers obtained in each of the Examples and Comparative Examples was calculated by the following method.
First, synchrotron X-ray diffraction (XRD) was performed on the positive electrode active materials, and a Rietveld analysis (Fullprof) was performed on the XRD data. Next, Ni-mixing amounts were randomly input to calculate Chi2 values, and the Ni-mixing with the lowest Chi2 value was used as the Ni-mixing in each positive electrode active material.

[Measurement of Post-Cycle Rate of Resistance Increase]

Battery resistance was measured before and after cycles under the following test conditions with respect to the cells obtained in each of the Examples and Comparative Examples. The results of the percentages (rate of resistance increase (%)) of battery resistance after the cycles when battery resistance before the cycles was set to "100%" are shown in Table 1. It can be said that the closer the rate of resistance increase is to 100%, the better battery characteristics are.

Test Conditions: 300 charging and discharging cycles were implemented between SOC 0% and 100% at 60°C and a rate of 2C.

[Table 1]

| | Li | Ni | Co | Mn | M1 | | M2 | | M3 | | M4 | | TM interlayer distance D (Å) | After cycles | |
|---|---|---|---|---|---|---|---|---|---|---|---|---|---|---|---|
| | Proportion x | Proportion a | Proportion b | Proportion c | Type | Proportion d | Type | Proportion e | Type | Proportion | Type | Proportion | | Ni-mixing (mol%) | Rate of resistance increase (%) |
| Comp. Ex. 1 | 1.1 | 0.8 | 0.1 | 0.1 | - | 0 | - | 0 | - | 0 | - | 0 | 1.95 | 10.2 | 150 |
| Comp. Ex. 2 | | | | | Zr | 0.003 | Al | 0.001 | - | 0 | - | 0 | 1.98 | 8.5 | 142 |
| Comp. Ex. 3 | | | | | Al | 0.030 | Mg | 0.004 | Ti | 0.004 | La | 0.002 | 2.00 | 7.5 | 138 |
| Comp. Ex. 4 | | | | | La | 0.010 | W | 0.010 | - | 0 | - | 0 | 1.97 | 7.2 | 139 |
| Ex. 1 | | | | | Ba | 0.010 | W | 0.010 | - | 0 | - | 0 | 2.21 | 3.2 | 109 |
| Ex. 2 | | | | | Pr | 0.010 | W | 0.010 | - | 0 | - | 0 | 2.17 | 2.3 | 104 |
| Ex. 3 | | | | | La | 0.010 | W | 0.010 | - | 0 | - | 0 | 2.12 | 2.1 | 103 |
| Ex. 4 | | | | | Sr | 0.010 | W | 0.010 | - | 0 | - | 0 | 2.15 | 2.8 | 107 |
| Ex. 5 | | | | | Sr | 0.010 | Mo | 0.010 | - | 0 | - | 0 | 2.04 | 2.4 | 105 |
| Ex. 6 | | | | | Sr | 0.010 | Nb | 0.010 | - | 0 | - | 0 | 2.06 | 1.9 | 101 |

[Table 2]

| | Synthesis method | Heating rate (°C/minute) to X - 100 °C | Heating rate (°C/minute) from X - 100 °C to X °C | Maximum attained temperature X (°C) during sintering | Sintering (from X - 100 °C to X °C) time (minutes) |
|---|---|---|---|---|---|
| Comp. Ex. 1 | 1 | 5 | | 800 | - |
| Comp. Ex. 2 | 1 | 5 | | 800 | - |
| Comp. Ex. 3 | 1 | 5 | | 800 | - |
| Comp. Ex. 4 | 1 | 5 | | 800 | - |
| Example 1 | 2 | 5 | 1 | 800 | 100 |
| Example 2 | 2 | 5 | 1 | 800 | 100 |
| Example 3 | 2 | 5 | 1 | 800 | 100 |
| Example 4 | 2 | 5 | 1 | 800 | 100 |
| Example 5 | 2 | 5 | 1 | 800 | 100 |
| Example 6 | 2 | 5 | 1 | 800 | 100 |

As shown in Table 1, it can be seen that in the positive electrode active materials of the Examples, which include both the M1 element and the M2 element and in which the TM interlayer distance (D) is in the aforementioned range, a low battery resistance can be realized compared with the positive electrode active materials of the Comparative Examples, where the TM interlayer distance (D) is outside the aforementioned range.

**Claims**

1. A positive electrode active material having a composition represented by $Li_xNi_aCo_bMn_cM1_dM2_eO_2$ and a TM interlayer distance (D) of 2.02 Å to 2.30 Å, wherein in the composition, $0.1 \leq x \leq 1.5$, $0.5 \leq a \leq 1.0$, $0 \leq b \leq 0.3$, $0 \leq c \leq 0.3$, $a + b + c = 1.0$, $0.0005 \leq d \leq 0.050$, and $0.0005 \leq e \leq 0.050$, M1 represents at least one type of element selected from the group comprising Ba, Pr, La, Y, Sr, Ce, Se, Hf, Rh, Zr, and Sn, and M2 represents at least one type of element selected from the group comprising W, Re, Sb, Sn, Ta, Os, Ir, Mo, Nb, Tc, Ru, Ga, Ag, Pd, Ge, As, Zr, In, Pt, Al, and Ti.

2. The positive electrode active material according to claim 1, wherein the combination of the M1 element and the M2 element is at least one combination selected from the group comprising Ba-W, Pr-W, La-W, Hf-W, Sr-Nb, Pr-Ta, Y-W, Sr-W, Ce-W, Pr-Re, Ba-Re, Sr-Sb, Se-W, Y-Re, Sr-Re, Rh-W, Zr-W, Sr-Sn, Y-Ta, Y-Sb, Sr-Os, Sr-Ta, Ce-Re, La-Re, Ba-Ta, Sr-Ir, Sn-W, Sr-Mo, Ba-Ti, Ba-Zr, and Ba-Al.

3. The positive electrode active material according to claim 1, wherein the combination of the M1 element and the M2 element is at least one combination selected from the group comprising La-W, Pr-W, and Sr-Nb.

4. The positive electrode active material according to any one of claims 1 to 3, wherein $0.7 \leq a \leq 1.0$.

5. The positive electrode active material according to any one of claims 1 to 4, wherein the M1 element is Sr.

6. The positive electrode active material according to any one of claims 1 to 4, wherein the M1 element is at least one element selected from the group comprising La and Ce.

7. The positive electrode active material according to any one of claims 1 to 6, wherein the M2 element is W.

8. A positive electrode including the positive electrode active material of any one of claim 1 to claim 7.

9. A lithium-ion battery having the positive electrode of claim 8.

10. A method of manufacturing a positive electrode active material comprising:

a step of mixing raw materials respectively including Ni, Co, and Mn, a raw material including Li, a raw material including an element represented by M1, and a raw material including an element represented by M2 to obtain a mixture; and

a sintering step of sintering the mixture by heating it in an oxygen atmosphere to a maximum attained temperature X - 100°C at a heating rate A of 1 °C/minute to 10 °C/minute and heating it from the maximum attained temperature X - 100°C to the maximum attained temperature X at a heating rate B of 0.1 °C/minute to 5 °C/minute that is slower than the heating rate A,

wherein M1 represents at least one type of element selected from the group comprising Ba, Pr, La, Y, Sr, Ce, Se, Hf, Rh, Zr, and Sn, and M2 represents at least one type of element selected from the group comprising W, Re, Sb, Sn, Ta, Os, Ir, Mo, Nb, Tc, Ru, Ga, Ag, Pd, Ge, As, Zr, In, Pt, Al, and Ti.

Europäisches
Patentamt

European
Patent Office

Office européen
des brevets

# EUROPEAN SEARCH REPORT

**Application Number**

EP 25 15 6222

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2021 527920 A (LG CHEMICAL LTD) 14 October 2021 (2021-10-14) * examples 5,6,8 * | 1-10 | INV. C01G53/506 H01M4/00 |
| X | EP 3 561 920 A1 (POSCO; RES INST OF IND SCI & TECHNOL) 30 October 2019 (2019-10-30) | 10 | |
| A | * examples * | 1-9 | |
| X | CN 116 190 609 A (HUADING GUOLIAN BATTERY MAT CO LTD) 30 May 2023 (2023-05-30) | 10 | |
| A | * examples * | 1-9 | |
| A | CN 112 204 776 A (LG CHEMICAL LTD) 8 January 2021 (2021-01-08) * the whole document * | 1-10 | |

**TECHNICAL FIELDS SEARCHED (IPC)**

C01G
H01M

The present search report has been drawn up for all claims

| Place of search | Date of completion of the search | Examiner |
|---|---|---|
| Munich | 20 June 2025 | Doslik, Natasa |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 6222

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2025

| Patent document cited in search report | | | Publication date | Patent family member(s) | | | Publication date |
|---|---|---|---|---|---|---|---|
| JP 2021527920 | A | | 14-10-2021 | CN | 112154558 | A | 29-12-2020 |
| | | | | EP | 3787075 | A1 | 03-03-2021 |
| | | | | JP | 7357991 | B2 | 10-10-2023 |
| | | | | JP | 2021527920 | A | 14-10-2021 |
| | | | | KR | 20190143294 | A | 30-12-2019 |
| | | | | US | 2021226204 | A1 | 22-07-2021 |
| | | | | WO | 2019245308 | A1 | 26-12-2019 |
| EP 3561920 | A1 | | 30-10-2019 | CN | 110178253 | A | 27-08-2019 |
| | | | | EP | 3561920 | A1 | 30-10-2019 |
| | | | | JP | 6979460 | B2 | 15-12-2021 |
| | | | | JP | 7421039 | B2 | 24-01-2024 |
| | | | | JP | 2020514972 | A | 21-05-2020 |
| | | | | JP | 2021177491 | A | 11-11-2021 |
| | | | | KR | 20180084727 | A | 25-07-2018 |
| | | | | US | 2019341598 | A1 | 07-11-2019 |
| | | | | WO | 2018117506 | A1 | 28-06-2018 |
| CN 116190609 | A | | 30-05-2023 | NONE | | | |
| CN 112204776 | A | | 08-01-2021 | CN | 112204776 | A | 08-01-2021 |
| | | | | EP | 3787076 | A1 | 03-03-2021 |
| | | | | JP | 7301444 | B2 | 03-07-2023 |
| | | | | JP | 2021527919 | A | 14-10-2021 |
| | | | | KR | 20190143293 | A | 30-12-2019 |
| | | | | PL | 3787076 | T3 | 05-08-2024 |
| | | | | US | 2021218023 | A1 | 15-07-2021 |
| | | | | WO | 2019245306 | A1 | 26-12-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022513681 A

- JP 2021177491 A